# EUROPEAN PATENT APPLICATION

(11) **EP 4 787 047 A1**
(43) Date of publication of application: **05.08.2026**
(21) Application number: 25217022.0
(22) Date of filing: 19.11.2025
(51) Int. Cl.: G02B 26/08, H04B 10/118, G02B 7/182

(54) **HIGH EFFICIENCY DIRECTIONAL STABILIZATION OF LASERS**

(30) Priority: 30.01.2025 US 202563751531 P; 07.02.2025 US 202519048222
(71) Applicant: The Boeing Company, Arlington, VA 22202 (US)
(72) Inventor: Griffin, Steven F., Arlington, VA, 22202 (US)
(74) Representative: Hoffmann Eitle

(57) **Abstract**

A laser directional stabilization system corrects pointing errors in a laser used to transmit data in free space optical links. The system includes a nutator that nutates a laser beam over the face of an optical fiber at a receiver. Light entering the fiber is used as a sensor to achieve for stabilization. The laser beam is nutated at a single, relatively high frequency using resonant amplifiers driving linear actuators. Knowledge of the nutation command and the time varying intensity of light received at the center of the fiber permits generation an error that is used in a feedback loop to reduce laser pointing error.

## Description

### BACKGROUND INFORMATION

### 1. Field:

This disclosure generally relates to optical lasers, and deals more particularly with a system for directional stabilization of lasers, especially in laser communication systems.

### 2. Background:

Laser communication systems are desirable because of their ability to efficiently transmit large amounts of data (high-bandwidth) with reduced interference. These systems, referred to as free-space optical (FSO) links, are used to transmit digital data in satellite-to-satellite, ground-to-satellite, and deep space communication links.

In order to optimize data transfer, the outgoing laser beam from a sender must be precisely centered with an optical aperture such as an optical fiber at the receiver where intensity is at a maximum. This precise centering is dependent upon accurate pointing of the transmitted laser beam. Accurate pointing can be challenging for several reasons including the presence of platform vibrations, thermal effects, and atmospheric conditions. Stabilization techniques using fast steering mirrors (FSM) can be employed to assist in maintaining accurate laser pointing. Known FSM systems employ various types of feedback sensors to achieve laser beam stabilization over a broad range of frequencies. However, the requirement to operate over a broad range of frequencies requires the use of mirror driving actuators and related circuits that are inefficient because of their relatively high power consumption. High power consumption is problematic in some applications such as satellites that are not connected to a power grid, and therefore have limited available power.

Accordingly, it would be desirable to provide a method, device and system for directional stabilization of lasers that is robust, simple, consumes less power and overcomes other disadvantages mentioned above.

### SUMMARY

The disclosure relates in general to optical lasers, and more specifically to directional stabilization of lasers used in optical communication systems. The disclosed method involves nutating the incoming laser beam through the face of an optical fiber at a receiver, and using the light that enters the fiber as a sensor to achieve stabilization. Nutation involves directing the incoming light in a circular pattern within the optical aperture of the fiber at a single, relatively high frequency but low amplitude. Knowledge of the nutation command and the time varying intensity of the light received at the center of the fiber allows generation of an error that is used as a sensor in a feedback loop to minimize or eliminate laser pointing error, resulting in stabilization of the laser beam at the center of the fiber.

The object above is resolved by means of a laser beam nutator according to independent claim 1, a laser directional stabilization system according to independent claim 7, and/or a method of stabilizing the pointing direction of a laser transmitting data in an optical communication system according to independent claim 11.

Distinct embodiments are derivable from the dependent claims.

According to one aspect, a laser beam nutator is provided comprising a gimbal, a frame, a mirror, and a shaft. The frame is mounted on the gimbal and the mirror is mounted on the frame. The mirror is configured to reflect a laser beam incident thereon. The shaft is coupled with a frame and is configured to adjust the gimbal.

According to another aspect, a laser directional stabilization system is provided. The system comprises a nutator and a nutator drive. The nutator includes a mirror that is configured to reflect a laser beam incident thereon. The nutator also includes a plurality of linear actuators configured to steer the mirror and nutate laser beam. The nutator drive is configured to drive the linear actuators and nutate the laser beam at substantially a single frequency.

According to a further aspect, a method is provided of stabilizing the pointing direction of a laser transmitting data in an optical communication system. The method includes receiving a laser beam on the face of an optical fiber, and nutating the laser beam over the face. The method also includes sensing the magnitude of light from the laser passing through the center of the face of the optical fiber, and adjusting the pointing direction of the laser based on the sensed the magnitude of light.

One of the advantages of the disclosed embodiments is that the stabilization system utilizes a nutator that is highly reliable and simple in construction. Another advantage is that the nutator utilizes a drive that is highly efficient and consumes less electrical power.

The features, functions, and advantages can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and advantages thereof, will best be understood by reference to the following detailed description of an illustrative examples of the present disclosure when read in conjunction with the accompanying drawings, wherein:
Figure 1 is an illustration of a perspective view of a constellation of earth orbiting satellites, and a ground based station interconnected by free space optical (FSO) communication links.
Figure 2 is an illustration of a combined block and diagrammatic view of a laser communication receiver used in the communication links of Figure 1.
Figure 3 is an illustration of an end face of an optical fiber, useful in explaining how nutation of a communication laser spot over the end face can be used to directionally stabilize a laser.
Figure 4 is an illustration of a perspective view of a nutator.
Figure 5 is an illustration of an enlarged view of one end of the nutator shown in Figure 4.
Figure 6 is an illustration of a longitudinal sectional view of the nutator.
Figure 7 is an illustration of an exploded perspective view of the nutator.
Figure 8 is an illustration of a side view of a piezo stack forming part of the nutator shown in Figures 4-7.
Figure 9 is an illustration of a diagrammatic perspective view useful in explaining principles of operation of the nutator.
Figure 10 is an illustration of a schematic diagram of the nutator drive shown in Figure 2.
Figure 11-13 are illustrations of waveform diagrams showing signals generated in the schematic circuit diagram of Figure 10.
Figure 14 is an illustration of a flow diagram of a method of stabilizing the pointing direction of a laser transmitting data in an optical communication system.

### DETAILED DESCRIPTION

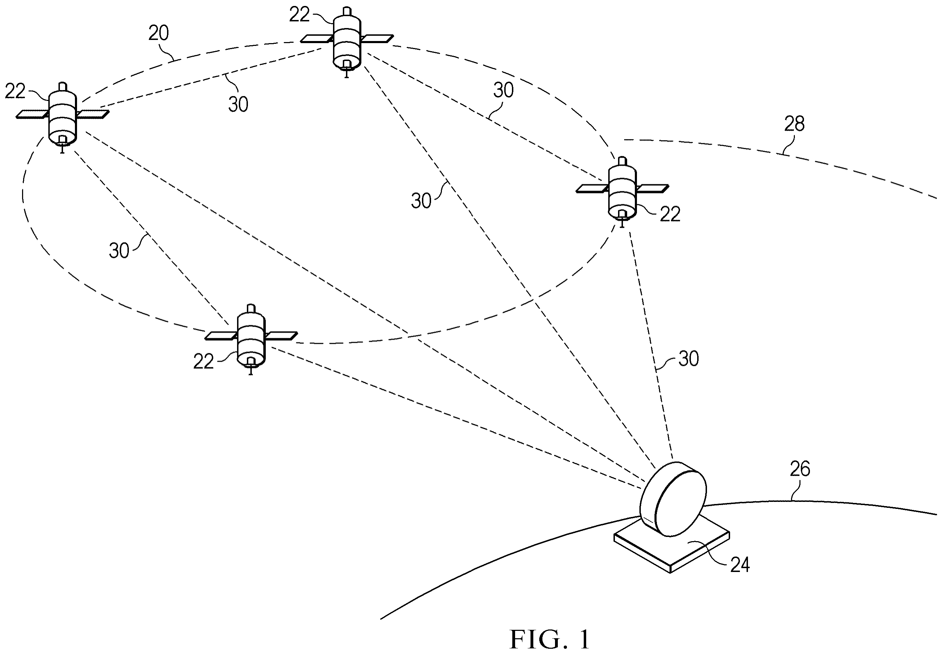

Referring first to Figure 1, a constellation 20 of satellites 22 in an orbit 28 above the earth 26 communicate with each other and/or with one or more ground stations 24 using FSO communication links 30, sometimes referred to as laser communication links. As will be explained below, each of the links 30 comprises a transmitter and receiver (transceiver) for sending/receiving digital data using lasers. Precise pointing of the lasers used in the communication links 30 is achieved by the laser stabilization system explained below. Although the laser stabilization system will be described in connection with its use in communication systems, the system can also be used to stabilize optical lasers used in a variety of other applications.

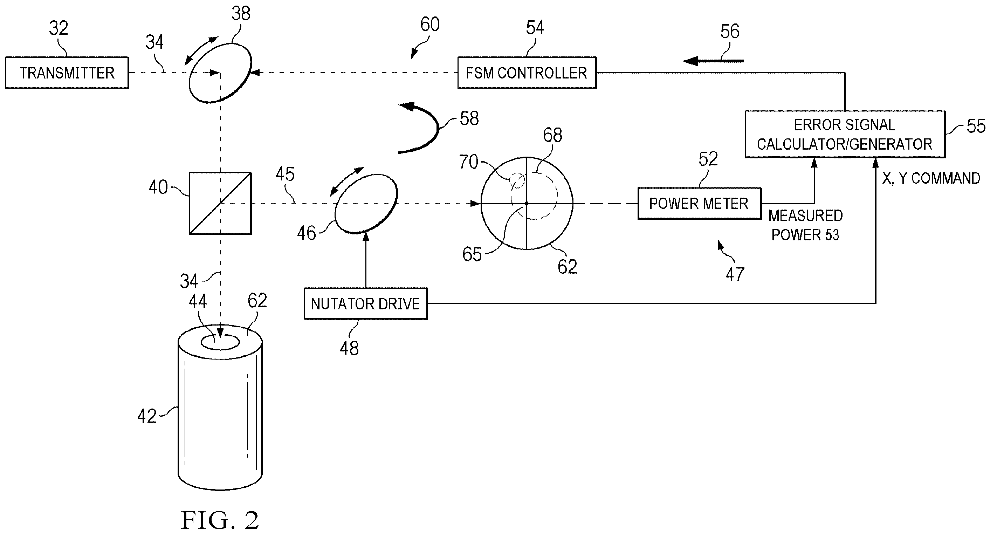

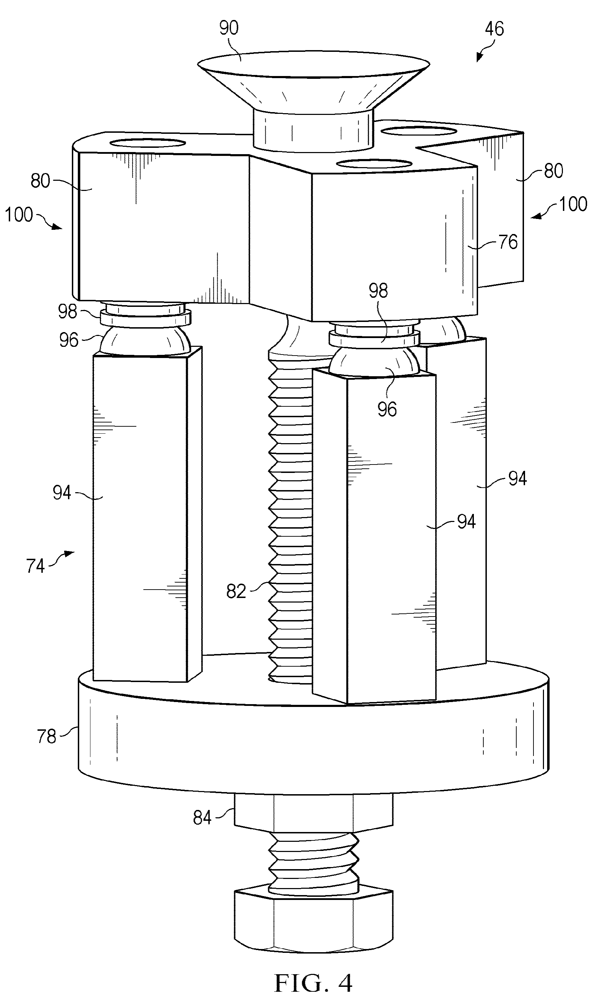

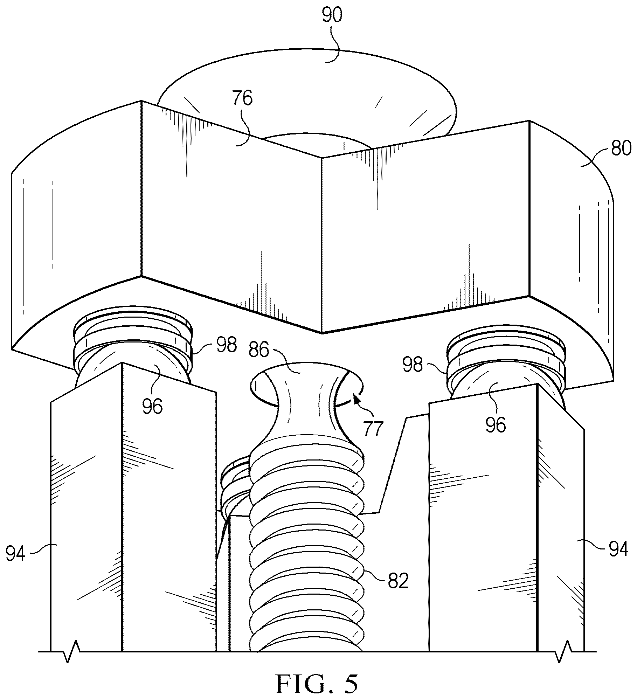

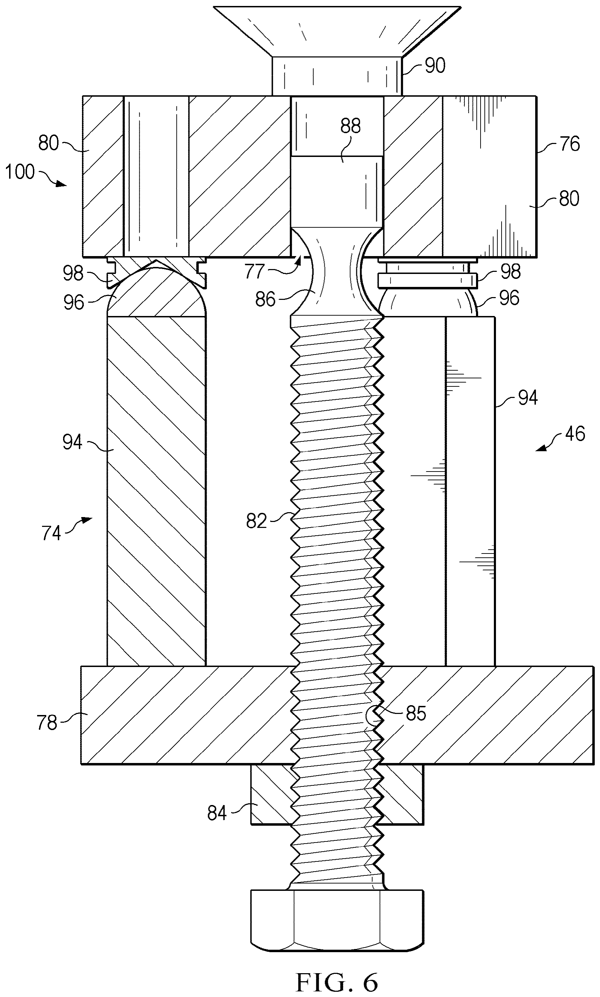

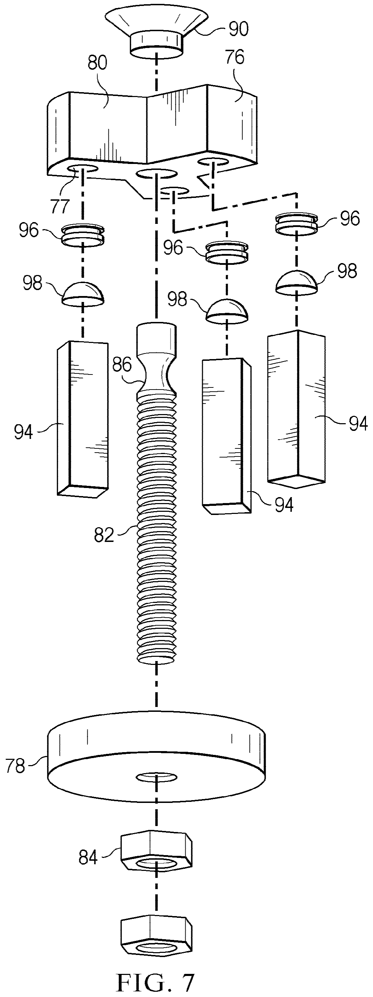

Figure 2 illustrates typical components of a receiver 60 used in the laser communication links 30 which includes a laser stabilization system 47 comprising a nutator 46, a nutator drive 48, a power meter 52 and an error signal generator 55. A laser beam 34 from a transmitter 32 received at a receiver 60 is directed onto a fast steering mirror (FSM) 38 operated by an FSM controller 54. The FSM 38 reflects the laser beam 34 through a beam splitter 40 onto the face 62 of an optical fiber 42, and more particularly into the center (optical aperture) 44 of the optical fiber 42. The beam splitter 40 splits the incoming laser beam 34, sending a laser beam 34 to a nutator 46 operated by a nutator drive 48 discussed below in further detail. The nutator 46 includes a steerable mirror 90 (Figure 4-7) that reflects laser beam 34 and nutates it as a spot 70 along a circular nutation path 68 across the face 62 of the optical fiber 42. Various nutation (scanning) paths can be followed as the laser beam 34 scans across the fiber face 62, however in the disclosed embodiment, a circular path is employed. The intensity (magnitude) of the light received at the center 65 of the fiber face 62 during scanning of the spot 70 is measured by a power meter 52. The measured power 53 varies over time depending on the location of the spot 70 on the fiber face 62 during the scanning process. In effect, the light entering the face 62 of the optical fiber 42 is used as a sensor to stabilize the pointing direction of the laser beam 34. In an alternate embodiment, the nutator 46 can be used to direct a portion of the laser beam 45 onto a position sensing detector (not shown), rather than onto the fiber face 62. The time varying intensity of light imaged onto the position sensing detector can then be used to calculate the laser pointing error.

The measured power 53 is sent to an error signal generator 55 along with X,Y commands used by the nutator drive 48 to control the nutator 46. These X,Y commands are essentially the time varying X and Y coordinates where the spot 70 is directed during the scanning process. With knowledge of the measured power at each location of the spot 70 at a given time as the laser beam scans over the fiber face 62, the error signal generator 55 calculates a beam pointing error, and generates an error signal 56. This error signal 56 effectively represents the degree of directional misalignment of laser beam 34 relative to the center 65 of the fiber face 62. The error signal 56 is transmitted in a feedback loop 58 to the FSM controller 54 which uses the error signal 56 to correct the pointing direction of the laser beam 34, so that the spot 70 is maintained at the center 65 of the fiber face 62, and maximum coupling efficiency and data transfer is achieved.

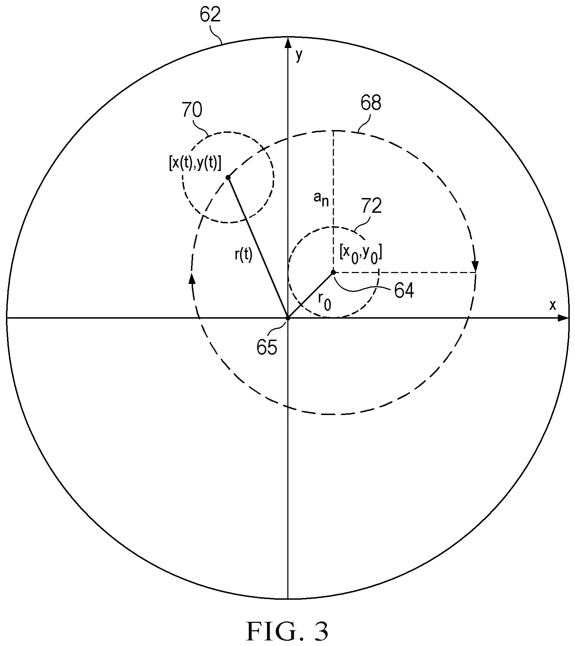

Figure 3 is an enlarged view of the face 62 of the optical fiber 42. The incoming laser beam 34 forms a spot 72 on the fiber face 62. The center 64 of the spot 72 is offset (misaligned) from the center 65 of the fiber face 62 by a distance rₒ. The laser beam 45 reflected by the nutator 46 forms a spot 70 that is effectively superimposed over the fiber face 62. The nutator 46 scans the laser beam 45 clockwise in a circular trajectory r(t) around the center 65 of the fiber face 62. This scanning process forms a circular nutation path 68 having an amplitude aₙ, and a range 66. As the spot 70 moves along the path 68, it is also "wobbled" (not shown). During this scanning process, the intensity of the spot 70 imaged over the fiber face 62 is measured as described above. Based on the known position and measured intensity of the spot 70, the pointing error of the laser beam 34 can be calculated.

Attention is now directed to Figure 4-9 which show additional details of the nutator 46. Nutator 46 broadly comprises a frame assembly 74, a threaded shaft 82, three linear actuators 94, and a steerable mirror 90. Although three linear actuators 94 are used in the illustrated example, more than three actuators may be used in other examples. The frame assembly 74 includes longitudinally spaced upper frame 76 and lower frame 78, each formed of a rigid material. Lower frame 78 has a threaded central hole 85 through which the shaft 82 is threaded. A nut 84 threaded onto the shaft 82 bears against the lower frame 78 and fixes the longitudinal position of the shaft 82. Loosening the nut 84 allows the longitudinal position of the shaft 82 to be adjusted.

Upper frame 76 comprises three radially extending arms 80 that are circumferentially spaced apart 120°. The shaft 82 includes an upper end 88 that is fixed to the upper frame 76 by any suitable means. The shaft 82 also includes a reduced diameter neck portion 86 immediately beneath the upper end 88. The diameter of the neck portion 86 will depend on the application, but is small enough to allow it radially flex slightly in any direction, similar to ball joints. The actuators 94 are circumferentially spaced 120° apart and are aligned with arms 80. The lower end of each of the actuators 94 is secured to the lower frame 78, while the upper end is pivota1lly coupled to the upper frame 76.

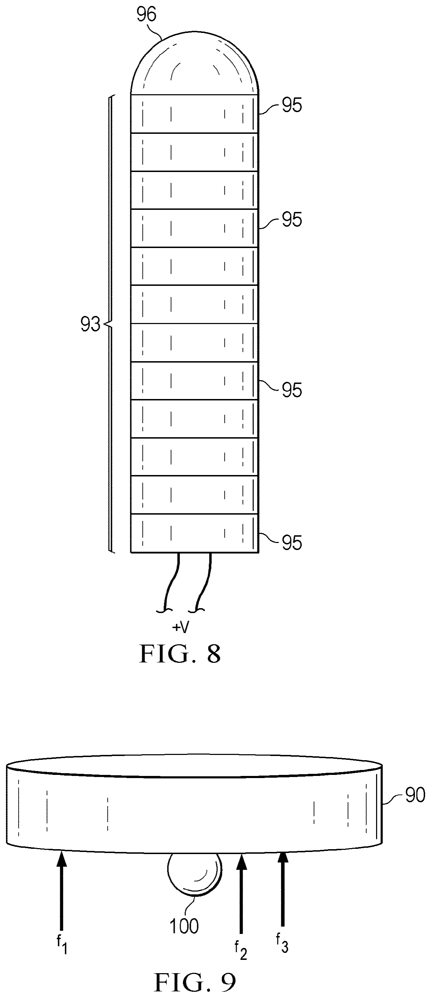

Referring to Figure 8, each of the linear actuators 94 comprises a stack 93 of piezoelectric devices 95 (hereinafter "piezo" and "piezo stack") coupled with an electrical power supply +V. Piezoelectric devices are desirable because of their mechanical simplicity, fast response time, low power consumption and self-sensing ability. In one example, the piezo stack 93 may comprise piezoceramic chips 95 stacked face-to-face and bonded together using epoxy and glass beads. Each of the piezos 95 has a fast response time and low drive voltage. Although not shown in the Figures, each of the piezos 95 can be covered with a waterproof outer coating such as a layer of ceramic.

Each of the linear actuators 94 includes a hemispherical end piece 96 formed of a rigid material such as ceramic. A socket-like cup 98 secured to the bottom of each of the arms 80 complementally receives one of the hemispherical end pieces 96 on an actuator 94. Although slightly curved in two dimensions, the cups 98 are nearly flat, consequently the loads applied by the piezo end pieces 96 are nearly point loads, and therefore avoid imparting a bending moment on the piezo stacks 93. The mirror 90 is mounted on top of the upper frame 76 and therefore tilts/swivels (nutates) along with the upper frame 76.

The flexibility of the reduced neck portion 86 along with the ball and socket-like flexible connection formed by the hemispherical end pieces 96 and sockets 98 form a gimbal 100 that allows the mirror 90 to steered (tilt/swivel) in any direction. The upper frame 76 is drawn down against hemispherical end pieces 96 by the threaded shaft 82 which can be locked in any adjustment position by the nut 84. In effect, the threaded shaft 82 preloads of the upper frame 76 against the actuators 94.

Figure 9 diagrammatically illustrates the gimbal mounting arrangement described above. The actuators 94 transmit forces f₁, f₂, f₃ to the mirror 90 that cause the mirror 92 to tilt and swivel about the gimbal 100. Each of the actuators 94 is independently controlled by the nutator drive 48 (Figure 2) which delivers electrical signals to the actuators 94 that are 120° out of phase. Linear displacement of an actuator 94 displaces a corresponding one of the arms 80, causing the mirror 92 to tilt/swivel in a manner that allows the nutator 46 to draw circular scans (Figure 3) on the fiber face 62 at a high frequency. As previously discussed, the circular nutation path scans 68 are used to determine a laser pointing error.

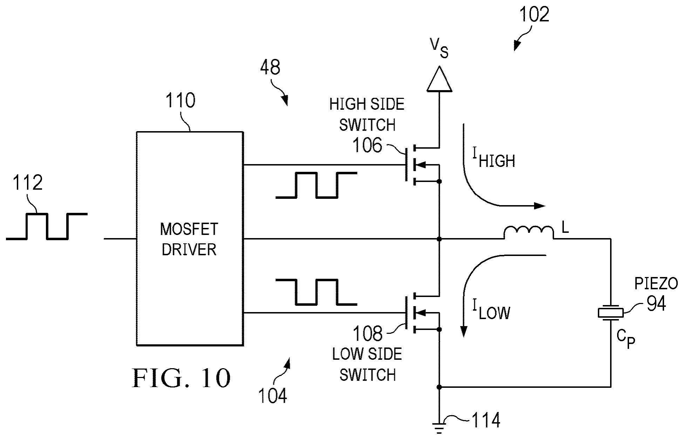

Attention is now directed to Figures 2, 10 and 11 which illustrate additional details of the nutator drive 48. Each of the linear actuators 94 is powered by a resonant amplifier 102 operating at a single, relatively high frequency, such as 1,000 Hz or higher. In the illustrated example, the nutator drive 48 comprises three resonant amplifiers 102 that are driven 120° apart, with each having the ability to change its output amplitude based on an individually applied input voltage. The input voltage applied to each amplifier 102 is adjusted to coordinate operation of the linear actuators 94, such that the mirror 90 tilts/swivels and causes the laser beam 45 to scan the fiber face 62 along a circular nutation path 68 (Figure 3). The resonant amplifiers 102 are highly efficient because of their ability to store energy, and their use of resonant amplification.

The amplifiers 102 comprise a resonant circuit formed by an inductor L matched to the capacitance C_{P} of the piezo 94, driving the voltage applied to the piezo 94 at the resonant frequency of the amplifier 102. The advantage of this arrangement is that a lower voltage amplifier 102 can be used at the resonant frequency to drive the piezo 94 at a high voltage. In one example, the inductor L is a fixed inductor L while another examples, it may be a variable inductor allowing selection of the resonant frequency. The energy stored in the inductor L is transferred to the piezo 94 at the resonant frequency. Using this arrangement of storing energy in the inductor L and then transferring this energy to the piezo 94 at the resonant frequency, a half bridge driver (amplifier) 104 can be used in lieu of a linear amplifier.

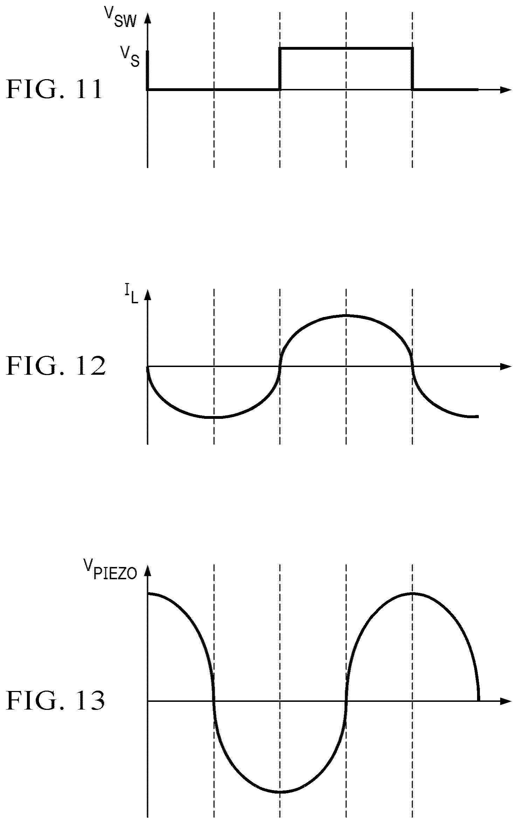

The half bridge driver 104 comprises a high-side switch 106 and a low side switch 108, each of which can be a MOSFET driven by a MOSFET driver 110 clocked by an input signal 112. When the switches 106, 108 are either ON (saturation, high current/low-voltage) or OFF (cutoff, low current/high-voltage), the power dissipation is relatively small because these switches are in their ohmic region during switching. The clocking signal 112 is delivered to the MOSFET driver 110 at the resonant frequency formed by the combination of the inductor L and the capacitance C_{P} of the piezo 94. During the first half cycle, the high side switch 106 is closed, and the low side switch is open, during which current I_{HIGH} flows from the voltage supply Vₛ through the inductor L and the piezo 94. On the second half of the cycle, the high side switch 106 is open and the low side switch 108 is closed, resulting in the current I_{LOW} being shunted to ground 114. As shown in Figures 11-13, the current I_{L} through the inductor L is in phase with the switching voltage V_{S}, and the piezo voltage V_{PIEZO} is 90° out of phase.

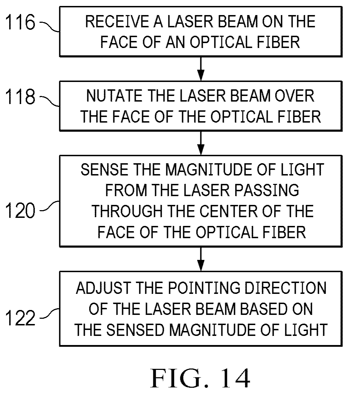

Attention is now directed to Figure 14 which broadly illustrates the steps of a method of stabilizing the pointing direction of a laser used to transmit data in an optical communication system. At 116, a laser beam 34 is received on the face 62 of an optical fiber 42. At 118, the laser beam 34 is nutated over the face 62 of the optical fiber 42. At 120, the magnitude of light from the laser beam passing through the center 65 of the face 62 of the optical fiber 42 is sensed. At 122, the pointing direction of the laser beam 34 is adjusted based on the sensed magnitude of light passing through the center 65 of the fiber face 62.

As used herein, the phrase "at least one of", when used with a list of items, means different combinations of one or more of the listed items may be used and only one of each item in the list may be needed. For example, "at least one of item A, item B, and item C" may include, without limitation, item A, item A and item B, or item B. This example also may include item A, item B, and item C or item B and item C. The item may be a particular object, thing, or a category. In other words, at least one of means any combination items and number of items may be used from the list but not all of the items in the list are required.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different advantages as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A laser beam nutator (46), comprising:
a gimbal (100);
a frame (74) mounted on the gimbal (100);
a steerable mirror (90) mounted on the frame (74) and configured to reflect a laser beam (45) incident thereon; and
a shaft (82) coupled with the frame (74) and configured to adjust the gimbal (100).

2. The laser beam nutator (46) of claim 1, further comprising:
a plurality of linear actuators (94) configured to nutate the steerable mirror (90).

3. The laser beam nutator (46) of claim 2, wherein:
the frame (74) includes an upper frame (76) and a lower frame (78) spaced apart from the upper frame (76), and
the linear actuators (94) extend between and are coupled with the upper frame (76) and the lower frame (78),
optionally wherein the shaft (82) is threaded through the lower frame (78) and includes an end (88) fixed to the upper frame (76).

4. The laser beam nutator (46) of claim 2 or 3,
wherein the gimbal (100) includes a reduced neck portion (86) on the shaft (82) allowing the shaft (82) to flex,
optionally wherein the gimbal (100) includes a plurality of ball joints (96, 98) located between the linear actuators (94) and the frame (74).

5. The laser beam nutator (46) of any one of claims 2 to 4,
wherein each of the linear actuators (94) includes a stack (93) of piezoceramic devices (95).

6. The laser beam nutator (46) of any one of claims 2 to 5, wherein the plurality of linear actuators (94) is a number more than 2 and less than 4, optionally three linear actuators (94) .

7. A laser directional stabilization system (47), comprising:
a leaser beam nutator (46) according to any one of claims 2 to 6; and
a nutator drive (48) configured to drive the linear actuators (94) and nutate the laser beam (44) at substantially a single frequency.

8. The laser directional stabilization system (47) of claim 7, wherein the nutator drive (40) includes resonant amplifiers (102) respectively coupled with the plurality of linear actuators (94), wherein each of the resonant amplifiers (102) operates at a single frequency,
optionally wherein the single frequency is at least approximately 1000 Hertz.

9. The laser directional stabilization system (47) of claim 7 or 8, further comprising:
a fast steering mirror (38) configured to point the laser beam (34) onto an optical fiber (42);
a fast steering mirror controller (54) configured to control the fast steering mirror (38);
a power meter (52) configured to measure an intensity of light from the laser beam (34) entering the optical fiber (42); and
an error signal generator (55) coupled with the power meter (52) and the fast steering mirror controller (54), the error signal generator (55) being configured to produce an error signal (56) representing an error in a pointing direction of the laser beam (34).

10. The laser directional stabilization system (47) of any one of claims 7 to 9, wherein the nutator drive (48) includes resonant amplifiers (102) driven out of phase with each other and respectively coupled with the linear actuators, each of the resonant amplifiers (102) including a resonant circuit that produces maximum amplification at the single frequency.

11. A method of stabilizing a pointing direction of a laser transmitting data in an optical communication system (30), comprising:
receiving a laser beam (34) on a face (62) of an optical fiber (42);
nutating the laser beam (24) over the face (62) of the optical fiber (42);
sensing a magnitude of light from the laser beam (34) passing through the center (65) of a face (62) of the optical fiber (42); and,
adjusting the pointing direction of the laser beam (34) based on the sensed magnitude of light.

12. The method of claim 11, further comprising:
generating a pointing error signal (56) based on the sensed magnitude of light, and
wherein adjusting the pointing direction is performed using the pointing error signal (56).

13. The method of claim 11 or 12, wherein generating the pointing error signal (56) is based on a location of the laser beam (34) on the face (62) of the optical fiber (42) during sensing of the magnitude of light.

14. The method of any one of claims 11 to 13,
wherein nutating the laser beam (34) includes moving the laser beam (34) in a circular path (68) over the face (62) of the optical fiber (42),
optionally wherein nutating the laser beam (24) is performed at a single frequency of at least approximately 1000 Hz.

15. The method of any one of claims 11 to 14, wherein sensing the magnitude of light is performed using a power meter (52).
